# EUROPEAN PATENT SPECIFICATION

(11) **EP 3 219 665 B1**
(45) Date of publication and mention of the grant of the patent: **25.11.2020**
(21) Application number: 16397508.9
(22) Date of filing: 18.03.2016
(51) Int. Cl.: C01B 32/23, C01B 32/00, B82Y 30/00, B82Y 40/00, C01G 5/00

(54) **METHOD FOR CONVERTING AQUEOUS METAL INTO COLLOIDAL METAL USING CARBOXYLATED ALLOTROPES OF CARBON**
VERFAHREN ZUR UMWANDLUNG VON WÄSSRIGEM METALL IN KOLLOIDALES METALL MIT CARBOXYLIERTEN ALLOTROPEN VON KOHLENSTOFF
PROCÉDÉ DE CONVERSION D'UN MÉTAL AQUEUX EN MÉTAL COLLOÏDAL À L'AIDE D'ALLOTROPES CARBOXYLÉS DE CARBONE

(43) Date of publication of application: 20.09.2017
(73) Proprietor: Te?ted Oy, 40100 Jyväskylä (FI)
(72) Inventor: Gilbert, Leona, 40014 Jyväskylä (FI); Garg, Kunal, 40014 University of Jyväskylä (FI)
(74) Representative: Papula Oy

(56) References cited:
- WO-A1-2012/177223
- CN-A- 103 913 573
- BAO Q ET AL: "Synthesis and characterization of silver nanoparticle and graphene oxide nanosheet composites as a bactericidal agent for water disinfection", JOURNAL OF COLLOID AND INTERFACE SCIENCE, ACADEMIC PRESS, NEW YORK, NY, US, vol. 360, no. 2, 15 August 2011 (2011-08-15), pages 463-470, XP002707272, ISSN: 0021-9797, DOI: 10.1016/J.JCIS.2011.05.009 [retrieved on 2011-05-11]
- YI WAN ET AL: "Graphene Oxide Sheet-Mediated Silver Enhancement for Application to Electrochemical Biosensors", ANALYTICAL CHEMISTRY, vol. 83, no. 3, 1 February 2011 (2011-02-01), pages 648-653, XP055295784, ISSN: 0003-2700, DOI: 10.1021/ac103047c
- UURIINTUYA DEMBERELDORJ ET AL: "Gold Nanorod-Assembled PEGylated Graphene-Oxide Nanocomposites for Photothermal Cancer Therapy", PHOTOCHEMISTRY AND PHOTOBIOLOGY, vol. 90, no. 3, 5 December 2013 (2013-12-05), pages 659-666, XP055295479, US ISSN: 0031-8655, DOI: 10.1111/php.12212
- XIAOMING SUN ET AL: "Nano-graphene oxide for cellular imaging and drug delivery", NANO RESEARCH, vol. 1, no. 3, 1 September 2008 (2008-09-01), pages 203-212, XP055171670, ISSN: 1998-0124, DOI: 10.1007/s12274-008-8021-8
- HE SHEN ET AL: "PEGylated Graphene Oxide-Mediated Protein Delivery for Cell Function Regulation", ACS APPLIED MATERIALS AND INTERFACES, vol. 4, no. 11, 28 November 2012 (2012-11-28), pages 6317-6323, XP055295577, US ISSN: 1944-8244, DOI: 10.1021/am3019367
- LOU YONGBING ET AL: "A competitive electrochemical immunosensor for the detection of human interleukin-6 based on the electrically heated carbon electrode and silver nanoparticles functionalized labels", TALANTA, ELSEVIER, AMSTERDAM, NL, vol. 122, 1 February 2014 (2014-02-01), pages 135-139, XP028845076, ISSN: 0039-9140, DOI: 10.1016/J.TALANTA.2014.01.016
- HONGJUN LIN ET AL: "Modified Enzyme-Linked Immunosorbent Assay Strategy Using Graphene Oxide Sheets and Gold Nanoparticles Functionalized with Different Antibody Types", ANALYTICAL CHEMISTRY, vol. 85, no. 13, 2 July 2013 (2013-07-02), pages 6228-6232, XP055315508, US ISSN: 0003-2700, DOI: 10.1021/ac401075u
- YAGATI AJAY KUMAR ET AL: "Silver nanoflower-reduced graphene oxide composite based micro-disk electrode for insulin detection in serum", BIOSENSORS AND BIOELECTRONICS, ELSEVIER BV, NL, vol. 80, 1 February 2016 (2016-02-01), pages 307-314, XP029441306, ISSN: 0956-5663, DOI: 10.1016/J.BIOS.2016.01.086

## Description

### FIELD OF THE INVENTION

The present invention relates to the field of nanocomposites comprising carboxylated allotropes of carbon. Particularly, the present invention is directed to the use of carboxylated allotropes of carbon as a peroxidase like catalytic enzyme for the chemical conversion of aqueous metal to colloidal metal.

### BACKGROUND OF THE INVENTION

Carbon is one of few chemical elements capable of forming multiple allotropes. Currently known forms of carbon include diamond, graphite and nanocarbons such as fullerenes, nanotubes and sheets of graphite (graphene).

Graphene is an allotrope of carbon in the form of a two-dimensional structure unlike graphite. Graphene is a single layer sheet of carbon atoms, wherein the atoms are organized to form aromatic rings. Thus, at the atomic scale, graphene represents a honeycomb lattice that solely consists of carbon atoms. Further, graphene oxide (GO) consists of carbon, oxygen and hydrogen in variable ratios. There has been tremendous advancement in the utilization of graphene in numerous industries, such as biosensors (Song et al 2010), as electro-catalysts (Liao et al 2015, see review Garg et al 2015), nano- and micro-electronics (Yuan et al 2015), and nano-compositions (Ma et al 2015).

When GO is modified with carboxyl groups (COOH), it results in producing GO-COOH. Carboxylated graphene oxide (GO-COOH) is an inorganic material that intrinsically possesses peroxidase like activity (Song et al 2010). Song and colleagues (2010) demonstrated that GO-COOH catalyzed the substrate 3,3,5,5-tetramethylbenzidine (TMB) in the presence of H₂O₂ to produce a blue color reaction in this selective colorimetric method. Their comparative kinetic studies between horseradish peroxidase and GO-COOH indicated that GO-COOH has higher catalytic activity to TMB.

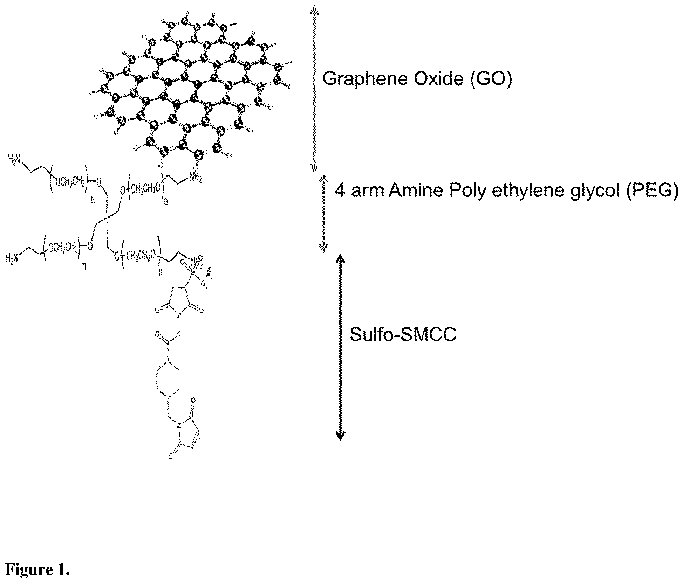

Here we present a novel way of using GO-COOH and other carboxylated allotropes of carbon as an oxidase to convert aqueous metal into colloidal metal. We have utilized strategies from Käll (2012) disclosing nucleation of aqueous metals into colloidal metals instead of growth of metals (traditionally through covalent bonding). We rely on the inherent oxidative catalytic properties of graphene in this chemical conversion. Others in the field (see below) have covalent bonded metals on graphene to form sheets or used the peroxidase catalytic activity of the graphene with its substrate TMB to aid in improved biosensors. Figure 1 represents the construction of the graphene oxide/metal nanocomposites described in this specification.

Yuan and coworkers (2015) utilized reduced graphene oxide-tetraethylene pentamine (rGO-TEPA) that permits an amination process for Pb²⁺ and Cu²⁺ adsorption in creation of nanosheets. The present invention is directed to nucleation of aqueous metals into distinct nanoparticles.

Deng and colleagues (2013) functionalized a nitrogen-doped graphene sheet non-covalently with hemin groups. The graphene sheet acted as a peroxidase to produce sensitive electrochemiluminescent (ECL) quenching of quantum dots (QDs) due to the annihilation of dissolved oxygen, the ECL coreactant, by its electrocatalytic reduction. This set up also used bidentate-chelated CdTe QDs and capture antibody in the immune assay and used hemin as the oxygen carrier to help in the catalyst of TMB. In the present invention, graphene oxide alone is used as an oxidase for the chemical conversion of aqueous metal to colloidal metal.

Xie and partners (2013) dispersed Co₃O₄ nanoparticles on reduced graphene oxide (rGO) surfaces prepared by in situ controlled growth of Co₃O₄ NPs on GO sheets. Covalent bonds are a final result in the growth of these metal sheets. The present invention discloses nucleated nanoparticle growth. The metal sheets of Xie et al would not allow specific absorbance at 405 nm.

BAO Q ET AL: "Synthesis and characterization of silver nanoparticle and graphene oxide nanosheet composites as a bactericidal agent for water disinfection", JOURNAL OF COLLOID AND INTERFACE SCIENCE, vol 360, no. 2, 15 August 2011, pages 463-470, describes GO nanosheets impregnated by silver nanoparticles. YI WAN ET AL: "Graphene Oxide Sheet-Mediated Silver Enhancement for Application to Electrochemical Biosensors", ANALYTICAL CHEMISTRY, vol. 83, no. 3, 1 February 2011, pages 648-653, discloses functionalized GO sheets coupled with a signal amplification method for the detection of bacteria.

UURllNTUYA DEMBERELDORJ ET AL: "Gold Nanorod-Assembled PEGylated Graphene-Oxide Nanocomposites for Photothermal Cancer Therapy", PHOTOCHEMISTRY AND PHOTOBIOLOGY, vol. 90, no. 3, 5 December 2013, pages 659-666, describes gold nanorod-attached PEGylated graphene oxide nanocomposites.

WO 2012/177223 describes nanocomposites including carbon nanotubes and silver nanoparticles.

XIAOMING SUN ET AL: "Nano-graphene oxide for cellular imaging and drug delivery", NANO RESEARCH, vol. 1, no. 3, 1 September 2008, pages 203-212, describes size separated pegylated nano-graphene oxide sheets, which may be used for cellular imaging and drug delivery.

LOU YONGBING ET AL: "A competitive electrochemical immunosensor for the detection of human interleukin-6 based on the electrically heated carbon electrode and silver nanoparticles functionalized labels", TALANTA, vol. 122, 1 February 2014, pages 135-139, discloses an electrochemical reduction method to prepare electrochemically reduced graphene oxide and gold-palladium bimetallic nanoparticles as the platform of immunosensor.

HONGJUN LIN ET AL: "Modified Enzyme-Linked Immunosorbent Assay Strategy Using Graphene Oxide Sheets and Gold Nanoparticles Functionalized with Different Antibody Types", ANALYTICAL CHEMISTRY, vol. 85, no. 13, 2 July 2013, pages 6228-6232, describes antibody-functionalized GO sheets and gold nanoparticles.

YAGATI AJAY KUMAR ET AL: "Silver nanoflower-reduced graphene oxide composite based micro-disk electrode for insulin detection in serum", BIOSENSORS AND BIOELECTRONICS, vol. 80, 1 February 2016, pages 307-314, describes Ag nanoflower decorated reduced GO modified micro-disk electrode arrays.

The various peroxidase-like activity of graphene-metalloprotein conjugates have been summarized recently but these still use mostly TMB as the substrate (Garg et al 2015). In the present invention, TMB is not used as substrate but the substrate is the aqueous metal itself.

### SUMMARY OF THE INVENTION

The present invention discloses use of a carboxylated allotrope of carbon in reducing aqueous metals into colloidal metals that can be detected spectroscopically, wherein said aqueous metal comprises Ag or said aqueous metal is AgNO₃. The term "aqueous metal" refers herein to a metal rendered soluble in aqueous solution. An "aqueous metal" is thus defined herein as a cation, dissolved in water, having chemical formula [M(OH₂)ₙ]^{z+}, wherein n is the solvation number and z is charge.

The present invention thus provides a method of converting aqueous metal into colloidal metal comprising a step of contacting an aqueous metal with a carboxylated allotrope of carbon in an aqueous buffer solution.

In another aspect, a use of the functionalized antibody-graphene oxide conjugate produced by activation of an antibody with Traut's reagent, activation of PEGylated graphene oxide with Sulfo-SMCC, and conjugating the activated PEG-graphene oxide to the activated antibody is disclosed, for catalysis of an aqueous metal to a colloidal metal in an enzyme-linked immunosorbent assay.

In another aspect, a use of the functionalized antibody-graphene oxide conjugate produced by activation of an antibody with Traut's reagent, activation of PEGylated graphene oxide with Sulfo-SMCC, and conjugating the activated PEG-graphene oxide to the activated antibody is disclosed, in catalysis of an aqueous metal to a colloidal metal in an aqueous buffer solution.

In another aspect, a use of the functionalized antibody-graphene oxide conjugate in direct detection of antigens in an aqueous buffer solution is disclosed.

In another aspect, a graphene oxide nanocomposite comprising nanoparticles of Ag embedded over a sheet of carboxylated graphene oxide is disclosed.

### BRIEF DESCRIPTION OF THE DRAWINGS

**Figure 1****.** Graphene oxide/metal nanocomposites. 4-arm amine polyethylene glycol (PEG) is attached at the -COOH sites on graphene and Sulfo-SMCC (sulfosuccinimidyl 4-(N-maleimidomethyl)cyclohexane-1-carboxylate) is introduced to ensure directed functionalization of other biomolecules.

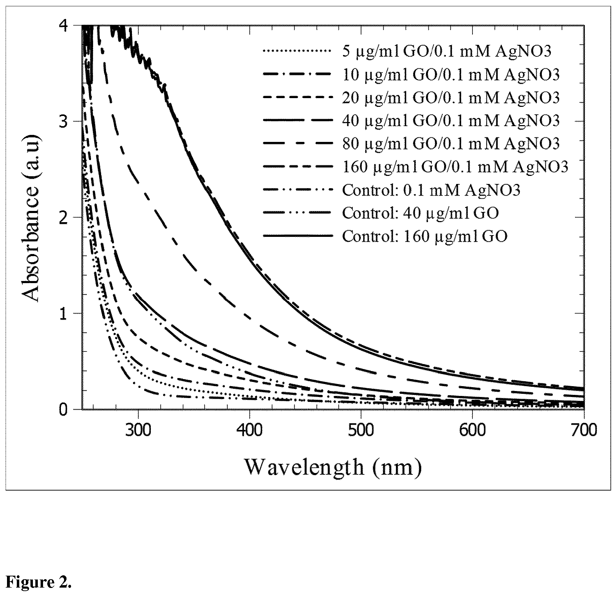

**Figure 2****.** UV-VIS spectral analysis to evaluate the facile synthesis of GO / Ag composites. Independent GO-COOH concentrations (5 µg/ml, 10 µg/ml, 20 µg/ml, 40 µg/ml, 80 µg/ml, and 160 µg/ml) was added to a constant concentration of 0.1 mM AgNO₃ under the appropriate influence of Na₂HPO₄, H₂O₂, and NH₃.

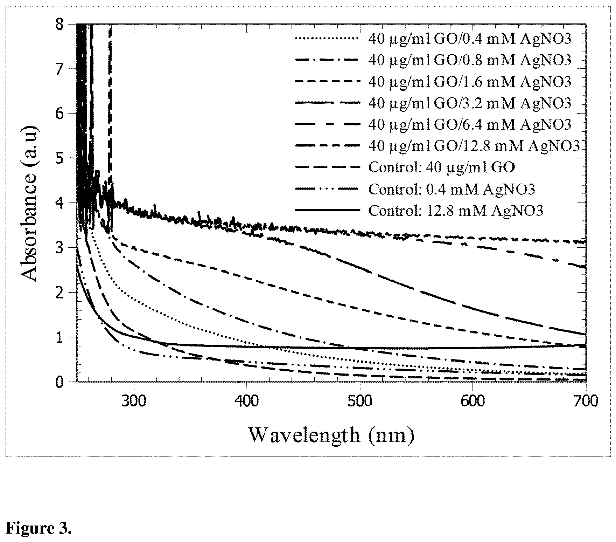

**Figure 3****.** UV-VIS analysis to evaluate the synthesis of GO / Ag composites by independently subjecting different AgNO₃ concentrations (0.4 mM, 0.8 mM, 1.6 mM, 3.2 mM, 6.4 mM, and 12.8 mM) to a constant concentration of 40µg/ml GO under the appropriate influence of Na₂HPO₄, H₂O₂, and NH₃.

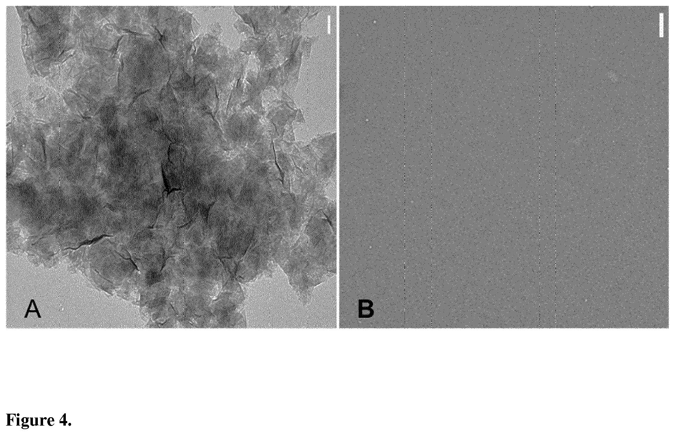

**Figure 4****.** Transmission electron microscope image of 160 µg/ml GO (A), and 12.8 mM AgNO₃ (B). Bar 500 nm.

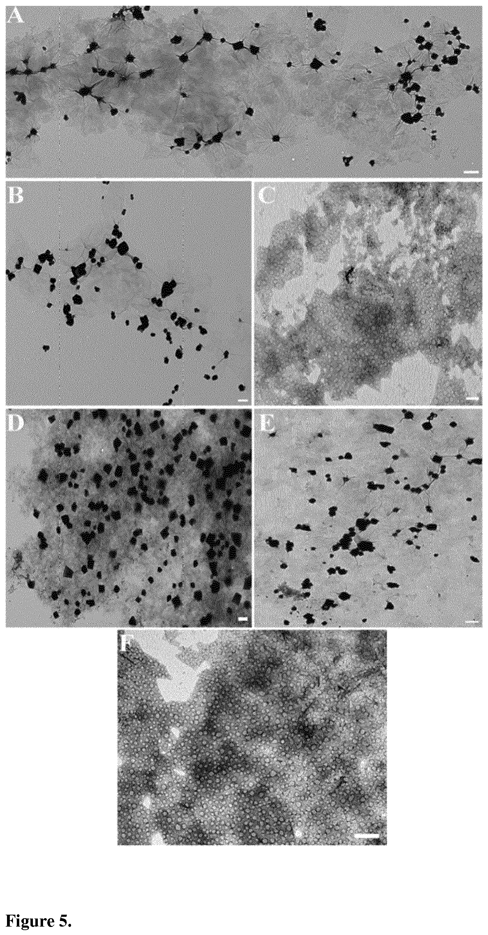

**Figure 5****.** Transmission electron microscope analysis to evaluate the facile synthesis of GO/Ag composites with varying GO concentrations. Different GO concentrations of 5 µg/ml, 10 µg/ml, 20 µg/ml, 40 µg/ml, 80 µg/ml, and 160 µg/ml were placed with a constant concentration of 0.1 mM AgNO₃ under the appropriate influence of Na₂HPO₄, H₂O₂, and NH₃. 5 µg/ml GO/0.1mM AgNO₃ composite (A), 10 µg/ml GO / 0.1mM AgNO₃ composite (B), 20 µg/ml GO/0.1mM AgNO₃ composite (C), 40 µg/ml GO / 0.1mM AgNO₃ composite (D), 80 µg/ml GO/0.1mM AgNO₃ composite (E), 160µg/ml GO/0.1mM AgNO₃ composite (F). Bar 500 nm.

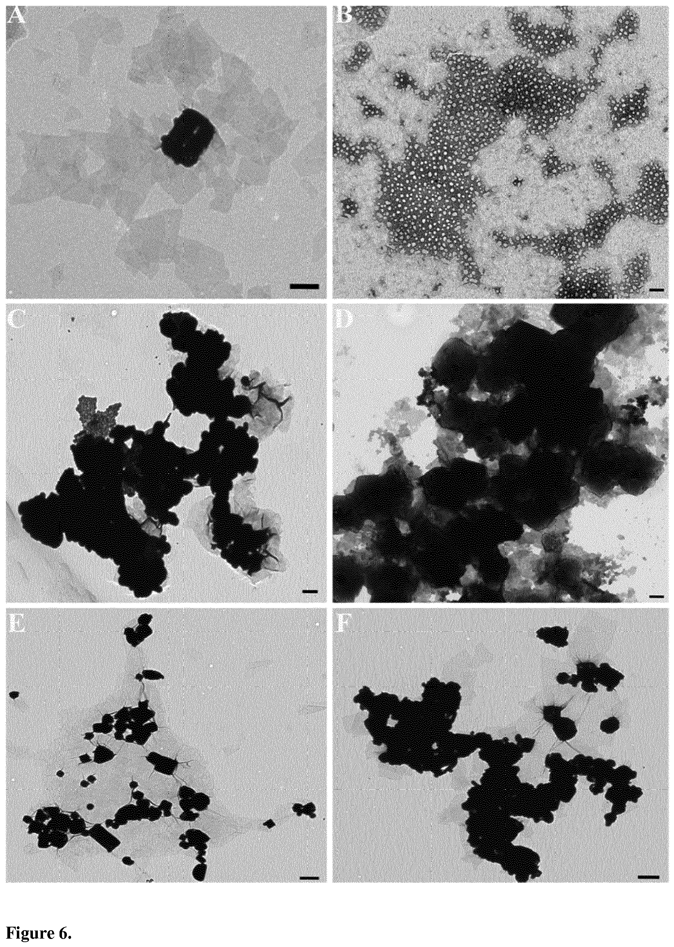

**Figure 6****.** Transmission electron microscope analysis to evaluate the synthesis of GO/ Ag composites by independently subjecting different AgNO₃ concentrations. Concentrations of 0.4 mM, 0.8 mM, 1.6 mM, 3.2 mM, 6.4 mM, and 12.8 mM) to a constant concentration of 40µg/ml GO under the appropriate influence of Na₂HPO₄, H₂O₂, and NH₃ were used. 40µg/ml GO / 0.4mM AgNO₃ composite (A), 40µg/ml GO / 0.8mM AgNO₃ composite (B), 40µg/ml GO / 1.6mM AgNO₃ composite (C), 40µg/ml GO / 3.2mM AgNO₃ composite (D), 40µg/ml GO / 6.4mM AgNO₃ composite (E), and 40µg/ml GO / 12.8mM AgNO₃ composite (F). Bar 500 nm.

### DETAILED DESCRIPTION OF THE INVENTION

The present invention describes a Metal Over Carbon (MOC) detection system suitable for biochemical assays. Specifically, the present invention is directed to a method of converting aqueous metal into colloidal metal. The method comprises a step of contacting an aqueous metal with a carboxylated allotrope of carbon, such as carboxylated graphene oxide (GO-COOH), in an aqueous buffer solution. Said aqueous metal comprises Ag. Examples of aqueous metal are AgNO₃, HAuCl₄, [Fe(OH₂)₆]³⁺ and [Co(OH₂)₆]²⁺.

The term "an allotrope of carbon" refers herein to structural modifications of carbon, wherein carbon atoms are bonded together in a different manner. For example, allotropes of carbon include tetrahedral lattice arrangement (diamond), sheets of a hexagonal lattice (graphite), single sheets of graphite (graphene), and spherical, tubular, or ellipsoidal formations (fullerenes). The expression "a carboxylated allotrope of carbon" refers herein to allotropes of carbon comprising a carboxyl group. Modification of allotropes of carbon with carboxyl group is one of the strategies to increase their water dispersibility. Carboxylated allotropes of carbon are disclosed in Liu et al., 2014; Lili et al., 2013; Qingsu et al., 2015; Wang et al., 2012; and Jiancheng et al., 2013.

The terms "graphene oxide" and "carboxylated graphene oxide" with abbreviations GO and GO-COOH, respectively, refer herein to single or few layer graphene dispersed in water, wherein said single or few layer graphene comprises epoxy-bridges, hydroxyl-groups and carboxyl groups.

The present method further comprises a step of adding H₂O₂ and NH₃ to the buffer solution and detecting the presence of colloidal metal by spectrophotometry. Aqueous buffer systems suitable for the above-described reaction and spectrophotometric detection are well-known in the art, such as phosphate (Na₂HPO₄) buffers. Other alternative detection methods are, e.g., absorption spectroscopy, Raman spectroscopy and surface plasmon resonance technology.

In one preferred embodiment of the invention, the amount of graphene oxide is in the range of 5 - 160 µg/ml of the aqueous buffer solution. In an embodiment wherein said aqueous metal is AgNO₃, the preferred concentration of AgNO₃ is in a range of 0.4 - 12.8 mM.

In another preferred embodiment of the invention, graphene oxide used in the method is PEGylated. Pegylation may be performed with a 6-arm PEG, 5-arm PEG, 4-arm PEG, 3-arm PEG or 2-arm PEG. PEGylated graphene oxide can be conjugated to a binding protein. The term "binding protein" refers herein to any protein that acts as an agent to specifically bind two or more molecules together, wherein one of said molecules is the binding protein itself. Examples of binding proteins as defined herein are antibodies, SH3 domains and other antibody mimetics such as anticalins. Accordingly, one preferred embodiment of the invention is to convert aqueous metal into colloidal metal by contacting the aqueous metal with a PEGylated graphene oxide conjugated to a binding protein, preferably to an antibody.

The term "antibody" in the context of the present invention refers to an immunoglobulin molecule, a fragment of an immunoglobulin molecule, or a derivative of thereof, which has the ability to specifically bind to an antigen, i.e. an antibody is a binding protein as defined herein. The term antibody herein also includes fragments of an antibody that retain the ability to specifically bind to the antigen. It has been shown that fragments of a full-length antibody may perform the antigen-binding function of an antibody. Examples of binding fragments encompassed within the term "antibody" include (i) a Fab' or Fab fragment; (ii) F(ab')₂ fragments; (iii) a Fd fragment consisting essentially of the V_{H} and C_{H1} domains; (iv) a Fv fragment or (vi) single chain antibodies or single chain Fv (scFv). An antibody as defined herein can be of any isotype, such as IgG, IgM, IgA or IgE.

The present specification also discloses a functionalized antibody-graphene oxide conjugate produced by activation of an antibody with Traut's reagent, activation of PEGylated graphene oxide with Sulfo-SMCC, and conjugating the activated PEG-graphene oxide to the activated antibody. Preferably, said PEGylated graphene oxide is produced by adding graphene oxide to PEG-NH₂ and sonicating the mix, adding N-(3-dimethylaminopropyl)-N'-ethylcarbodiimide hydrochloride (EDC) and sonicating the mix for up to 2 hours, stirring overnight and then performing centrifugation to remove excess PEG and EDC. More preferably, said PEGylated graphene oxide is PEGylated with a 6-arm PEG, 5-arm PEG, 4-arm PEG, 3-arm PEG or 2-arm PEG. The detailed method for the production of the conjugate is disclosed in the Experimental Section below. In further embodiments of the invention, the conjugate can be used for catalysis of an aqueous metal to a colloidal metal in an enzyme-linked immunosorbent assay or in direct detection of antigens in an aqueous buffer solution.

The present disclosure also provides a graphene oxide nanocomposite comprising nanoparticles of a metal selected from the group consisting of Al, Sc, Ti, V, Cr, Mn, Fe, Ni, Cu, Zn and Ag embedded over a sheet of carboxylated graphene oxide. Preferably, said graphene oxide nanocomposite is a composite of carboxylated graphene oxide and Ag nanoparticles.

In one major embodiment of the present invention, the Metal Over Carbon (MOC) detection system described herein emphasizes on replacing the conventional horseradish peroxidase (HRP) enzyme on secondary antibodies with carboxylated graphene oxide (GO-COOH). Carboxylated graphene oxide (GO-COOH) intrinsically possesses peroxidase like activity. Therefore, replacement of HRP with GO-COOH will not only facilitate catalysis of 3,3,5,5-tetramethylbenzidine (TMB), but also colloidal metal solution such as aqueous AgNO₃ to produce graphene oxide/silver nanoparticle (GO-COOH/Ag) nanocomposites. Applications of the MOC detection system can be largely extrapolated to develop novel biochemical assays and biosensors that are fundamentally built on the Enzyme Linked Immunosorbent Assay (ELISA) principles.

With the help of MOC detection system, the read out method for a biochemical assay or a biosensor can be specifically tailored to meet the needs of different spectroscopy techniques such as absorption spectroscopy, Raman spectroscopy, or surface plasmon resonance technology. Thus, opening numerous avenues for industrial application and research purposes.

Peroxidases are a large family of enzymes that catalyze an array of reactions between varieties of organic compounds by shuttling electrons. Horseradish peroxidase (HRP) is one of the most commonly used peroxidases in biochemical assays and biosensors that are fundamentally built on the Enzyme Linked Immunosorbent Assay (ELISA) principles. On an ELISA platform, HRP enzyme is attached to the secondary antibody that directly binds to the primary antibody/ patient serum. The most commonly used substrate on ELISA platform is 3,3,5,5-tetramethylbenzidine (TMB). HRP in the presence of TMB produces blue colour that directly correlates to the primary antibody concentration. Though HRP enzyme based absorption readout method is a convention, HRP conjugated secondary antibodies are difficult to obtain, highly expensive, unstable to biodegradation, and exceedingly vulnerable to denaturation. Incidentally, all organic compounds are unstable to biodegradation and vulnerable to denaturation.

Preferably, the MOC detection system utilizes GO-COOH conjugated secondary antibodies that can catalyze colloidal metal solution such as aqueous AgNO₃ in the presence of H₂O₂ to produce graphene oxide/silver nanoparticle (GO-COOH/Ag) nanocomposites. At the atomic scale, the resultant GO-COOH/Ag nanocomposites represent silver nanoparticles embedded all over the graphene sheet, thus "metal over carbon (MOC) detection system". GO-COOH conjugated secondary antibodies are very easy to obtain, highly inexpensive, more stable to biodegradation and less vulnerable to denaturation when compared to the HRP enzyme. Like the HRP conjugated secondary antibody, the GO-COOH conjugated secondary antibodies can also reduce TMB in the presence of H₂O₂ to produce blue colour that will directly correlate to the primary antibody concentration. Unlike the HRP conjugated secondary antibody, the MOC detection system is not restricted only to absorption spectroscopy based readout.

A use of a carboxylated allotrope of carbon, preferably carboxylated graphene oxide as catalytic enzyme for the chemical conversions of aqueous metal to colloidal metal is also disclosed. Said carboxylated allotrope of carbon is preferably conjugated to a binding protein.

In the Experimental Section below, graphene oxide comprising carboxyl groups was used as an oxidase to reduce aqueous silver nitrate into colloidal nanoparticles. These nanoparticles could be seen spectroscopically and microscopically.

Having generally described the invention above, the same will be more readily understood by reference to the following Experimental Section, which is provided by way of illustration and is not intended as limiting.

### EXPERIMENTAL SECTION

### Facile synthesis of Graphene Oxide (GO) / Silver (Ag) nanoparticle composite:

In order for GO to act as an enzyme, its environmental conditions were tailored for reducing aqueous metals such as the AgNO₃ by adjusting protocols that were previously reported (Song et al 2010; Rodriguez-Lorenzo et al 2012). Synthesis of the GO / Ag composite was realized by varying the concentration of GO in the presence of AgNO₃ at a constant concentration and vice versa.

Firstly, different GO (Graphenea, 4mg/ml, water dispersion 250 ml) concentrations (5 µg/ml, 10 µg/ml, 20 µg/ml, 40 µg/ml, 80 µg/ml, and 160 µg/ml) were independently supplemented along with 100 mM H₂O₂ (30 % w/w, Sigma-Aldrich), 0.1 mM AgNO₃ (Amorphous form, Sigma-Aldrich), and 40 mM NH₃ (4 M Ammonia solution, Sigma-Aldrich) to a final volume of 1 ml in Na₂HPO₄ (Sigma-Aldrich) buffer (25 mM, pH 4.0, 37°C).

Secondly, different AgNO₃ concentrations (0.4 mM, 0.8 mM, 1.6 mM, 3.2 mM, 6.4 mM, and 12.8 mM) were independently supplemented along with 100 mM H₂O₂, 40 µg/ml GO, and 40 mM NH₃ to a final volume of 1ml in Na₂HPO₄ (25 mM, pH 4.0, 37°C) buffer.

Temperature of the tube was consistently maintained at 37°C on a heat block, and each component was added to the tube at 15 min intervals. The order in which each chemical was added to Na₂HPO₄ (25mM, pH 4.0, 37°C) buffer was GO, H₂O₂, AgNO₃, and NH₃. UV-VIS spectral analysis was carried out 15 min after adding NH₃. The Na₂HPO₄, H₂O₂, and NH₃ conditions for processing GO or AgNO₃ controls were similar to that of any GO/Ag composite synthesis process, except a GO control was not subjected with Na₂HPO₄ instead of AgNO₃ and vice versa for the AgNO₃ controls. Figure 2 provides UV-VIS spectral analysis to evaluate the facile synthesis of GO / Ag composites with varying concentrations of GO.

In Figure 2 is depicted, that ranges of 40 µg/ml of 80 µg/ml GO will provide the absorbance needed for detection at 405 nm range, used traditionally in ELISA based technologies.

When the spectra for 160 µg/ml GO / 0.1 mM AgNO₃ composite were compared to the 160 µg/ml GO control spectra, it was observed that the change in absorbance increases, but not significantly enough to a make a clear distinction between the two. Varying GO concentrations in the presence of 0.1 mM AgNO₃ produces spectra that are GO dominant and not GO/Ag dominant. Additionally, this figure demonstrates that graphene could be observed in all spectral ranges from 250 to 700 nm.

Similar experiments were conducted with a constant amount 40 µg/ml GO with varying concentrations of aqueous AgNO₃. Figure 3 demonstrates experiments with 0.4 mM, 0.8 mM, 1.6 mM, 3.2 mM, 6.4 mM, and 12.8 mM concentrations of AgNO₃ and that ranges of 0.8 mM, 1.6 mM, 3.2 mM AgNO₃ will provide absorbance needed for detection at 405 nm range, used traditionally in ELISA based technologies. Similarly, this figure demonstrates that graphene could be observed in all spectral ranges from 250 to 700 nm.

As demonstrated in Figure 3, the spectra for 40 µg/ml GO / 12.8 mM AgNO₃ composite when compared to the 12.8 mM AgNO₃ control spectra clearly indicate the 4-fold increase in absorbance between the two. Varying AgNO₃ concentrations in the presence of 40µg/ml GO produces spectra that are GO / Ag dominant and not just GO or AgNO₃ dominant. In accordance with the varying amounts of AgNO₃ subjected to GO, the molar ratio/factor can range from 1.70 to 54.40. The latter is the upper limit, as it can be seen that the 40 µg/ml GO / 12.8 mM AgNO₃ composite spectra saturate the machine's capability to absorb.

Visualization studies were conducted to view the colloidal structures. Transmission electron microscopy was conducted by placing 5 µl of sample on 200 mesh copper Formavar/carbon cover grids, and viewed with an electron microscope JEM-1400 (Jeol, Tokyo, Japan). Images were taken with iTEM software (Olympus, Münster, Germany). Figure 4 presents graphene alone and aqueous AgNO₃ alone.

To see the events of nucleated silver, Figure 5 provides a schematic view.

When compared to the GO and AgNO₃ controls, it can clearly be seen (Figure 5) that the black dots deposited on the GO sheets are indeed the Ag nanoparticles. Since the nucleation process for the formation of the silver nanoparticles was not controlled, on average the particles size were found to be approximately ± 500 nm. The colloidal growth/formation of Ag nanoparticles was observed only on the GO sheets but not around the GO sheets, suggesting that the GO not only plays an imperative role to reduce the aqueous AgNO₃, but also acts as a substrate on which the Ag nanoparticles can grow non-covalently. It is clear that although varying GO concentrations in the presence of 0.1 mM AgNO₃ produces spectra that are GO dominant and not GO/Ag dominant, it does not rule out the fact that silver nanoparticles still get deposited on the GO sheets.

Similarly when viewing the experiments with constant GO and varying AgNO₃ (Figure 6), nucleation of the silver is occurring at sufficient rates.

When compared to the GO and AgNO₃ controls (Figure 4) it is clearly established (Figure 6) that the black dots/patches deposited on the GO sheets are indeed silver nanoparticles. Since the nucleation process for the formation of the silver nanoparticles was not controlled, on average the particles size were found to be much larger than ± 500 nm. More importantly, with the increasing amounts of AgNO₃ concentrations it was observed that instead of Ag nanoparticles on the GO sheets, continuous colloidal Ag growth as a patch on the GO sheets was observed.

Ranges of 40 µg/ml to 80 µg/ml GO will provide sufficient absorbance needed for detection at 405 nm range and ranges of 0.8 to 3.2 mM AgNO₃ will also provide sufficient absorbance for detection at a wide spectrum. More specifically, the preferred chemical reactions proceeds at 40 µg/ml, 3.2 mM AgNO₃, 100 mM H₂O₂, 40 mM NH₃, 25 mM Na₂HPO₄ pH 4.0, 37°C. The order in which each chemical was added to 25 mM Na₂HPO₄ pH 4.0 buffer was GO, H₂O₂, AgNO₃, and NH₃. UV-VIS spectral analysis is conducted after 15 min 37°C incubation period.

### Conjugation of GO to Antibody (GO/Ab)

Conjugation of antibodies to graphene has been reported previously (Welsher et al 2008; Liu et al 2009; Yang et al 2013; Shahbazi-Gahrouei et al 2013; Liu et al 2008). However, to appreciate applications of GO/Ab on serological platforms such as Enzyme Linked Immunosorbent Assay (ELISA), it is imperative that the conjugate is produced at high enough concentrations in large volumes, and is purified of either unconjugated GO or the antibodies. Mass production of GO/Ab conjugates underlines its potential to be applied ubiquitously in the diagnostic industry, and across diagnostic platforms. Purifying the conjugate will ensure elimination of false signals that might arise in instances where the secondary antibody is bound to a primary antibody, but not to the GO. Detailed below is a protocol to meet both the prerequisites to utilize GO/Ab conjugates on serological platforms.

### Functionalization / PEGylation of GO

1. Prepare 10 ml of 1 mg/ml GO by dissolving the stock GO solution in ddH₂O.
2. Add 200 mg of PEG-NH₂ (NOF America corporation, Sunbright® PTE-100PA), and resuspend the solution well. Sonicate the solution for 30 min.
3. Add 10 mg of N-(3-Dimethylaminopropyl)-N'-ethylcarbodiimide hydrochloride (EDC, Sigma-Aldrich (#161462)), and resuspend the solution well. Sonicate the solution for 1 hr.
4. Finally, add 30 mg of EDC, and resuspend the solution properly. Sonicate the solution for another 1 hr.
5. After step 4, stir the reaction overnight.
6. Further, centrifuge the solution at 21,000 g for 1 hr at 10°C to 20°C (Sorvall Instruments RC5C).
7. Retrieve the supernatant carefully into a 15 ml-Amicon centrifugal filter device (MWCO = 100 KDa) and centrifuge it at 2,200 g for 5 min at 20°C, then discard the flow through.
8. To remove excess PEG-NH₂, and EDC, fill the filter device to 15ml with ddH₂O and centrifuge again at 2,200 g for 5 min at 20°C, then discard the flow through. Repeat the same centrifugation process six times. After centrifuging the solution six times, ≤ 500µl should remain in the filter device.
9. To determine the concentration of PEGylated GO, record the UV-VIS NIR absorbance at 808 nm and divide the value by 8.2 L.g⁻¹.cm⁻¹.

### Linking PEGylated GO to the Antibodies:

The procedure for linking PEGylated GO to the antibodies can be divided into three parts. "Part A" will deal with activation of antibodies with the Traut's reagent (Thermo Fisher Scientific, Prod# 26101). "Part B" will deal with activation of PEGylated GO with the No Weigh™ Sulfo-SMCC (Thermo Fisher Scientific, Prod# 22622). "Part C" will finally deal with conjugating the activated PEG-GO to the activated antibodies (Dako, A0423).
Part A:
   1. Add 10 µl of Traut's reagent, 10 µl of IX PBS, and 20 µl of Ethylenediaminetetraacetic acid (EDTA, Sigma-Aldrich) to 400 µl of 1 mg/ml antibodies in 1 X PBS. The Traut's reagent to antibody molar ratio is ∼10:1.
   2. Resuspend the solution well and incubate at +4°C for 2 hrs under gently shaking conditions.
   3. After 20 min proceed with the Part B protocol.
Part B:
   4. Dissolve the 2 mg No-Weigh™ Sulfo-SMCC with 200 µl of Dimethyl sulfoxide (DMSO, Sigma-Aldrich).
   5. Mark up the volume to 886 µl by adding ddH₂O to the PEGylated GO solution.
   6. Add 100 µl of 10 X PBS and mix the solution well.
   7. Add 14 µl of No-Weigh™ Sulfo-SMCC, and incubate it at room temperature for 2 hrs under gently shaking conditions.
   8. Meanwhile, equilibrate a desalting column (GE Healthcare Lifescience, #17-0853-02) with 10 ml of exchange buffer (50mM MES, 2mM EDTA, pH 6.0).
   9. Leave 1 ml exchange buffer above the column bed and cap the elution end of the desalting column.
Part C:
   10. To remove the excess traut's reagent, fill an Amicon Ultra-0.5 ml centrifugal filter (MWCO = 100KDa) with the solution incubated in Part A of this linking experiment.
   11. Centrifuge the solution at 10,000 g for 8 min. Meanwhile, add 100 µl of 10XPBS, and 20 µl of EDTA to an eppendorf tube, also let the 1 ml exchange buffer on the column bed start eluting.
   12. This centrifugation should result in ≤10 µl of the Part A solution. Mix that solution with the eppendorf tube that was prepared in step 11.
   13. In the desalting column, as soon as the exchange buffer approaches the column bed, add the 1 ml of the Part B solution. Once, the Part B solution reaches the column bed, add 1 ml of the exchange buffer to help the Part B solution elute.
   14. As the first brown-black coloured droplet elutes, start collecting the elution directly into the eppendorf tube from step 12. Collect to a final volume of 1ml only.
   15. Incubate the solution at room temperature for 1 hr under gently shaking condition. The conjugate can then be stored overnight at +4°C.
   16. The conjugate can be purified using the Advantec USY-20 (Advantec # 39651020). The conjugate is ready to be used for serological assays.

### Proof of concept for MOC in an ELISA procedure

The 1 mg/ml antigen stocks were diluted at 1:100 dilutions in 0.1 M Carbonate buffer (0.1 M Na₂CO₃ + 0.1 M NaHCO₃, pH 9.5). In addition to antigens, similar dilution was used for two positive controls i.e., IgG (Sigma #I251T) and IgM (Sigma #18260). As negative control, *E.Coli* DH5α was diluted to 1:400. In order to realize consistency with regards to resulting Optical Density (OD) value at 405 nm, these positive and negative controls were used. An amount of 100 µl of antigens and controls were coated in triplicates and duplicates, respectively, on flat bottom 96-well polystyrene ELISA plates (Nunc) which were incubated at +4°C overnight. Post incubation, the plates were washed three times with 300 µl of PBS-Tween (PBS + 0.05% Tween 20) and were then coated with 100 µl of 2% BSA (Sigma #A7030) in PBS to prevent immunoglobulin from any unspecific binding. Subsequent to an overnight incubation at +4°C, the previously coated 2% BSA in PBS was discarded and 100 µl of patient serum diluted to 1:200 in 1% BSA/PBS was added. The plates were then allowed to incubate for 2h at room temperature, and then washed five times with 300 µl of PBS-Tween. The procedure from here on was extended to two more wells on every plate that acted as a blank control. 100 µl of GO/Ab conjugate was introduced to the plates at a range of 1/10 to 1/2000 dilutions. Post 1.5 hrs incubation at room temperature, plates were washed five times with 300 µl of PBS-Tween and were then supplemented with 100 µl of 62.5 mM Na₂HPO₄, and 50 µl of 500 mM H₂O₂. The plates were stored at 37°C in an incubator for 15 min. 50 µl of 4 mM AgNO₃, and 50 µl of 200 mM NH₃ was added to the wells. The plates were stored again at 37°C in an incubator for 15 min. O.D analysis was carried out at 405 nm.

### REFERENCES

Deng S1, Lei J, Huang Y, Cheng Y, and Ju H. (2015). Electrochemiluminescent quenching of quantum dots for ultrasensitive immunoassay through oxygen reduction catalyzed by nitrogen-doped graphene-supported hemin. Anal Chem. 2013 Jun 4;85(11):5390-6. doi: 10.1021/ac3036537.
Garg B, Bisht T, and Ling YC. (2015). Graphene-Based Nanomaterials as Efficient Peroxidase Mimetic Catalysts for Biosensing Applications: An Overview. Molecules. 4;20(8):14155-90. doi: 10.3390/molecules200814155.
Jiancheng et al., A facile route to carboxylated carbon nanofibers and their functionalization by robust octasilsesquioxanes via conjugated linkage. J. Mater. Chem. C, 2013,1, 646-656.
Käll. M. (2012). Plasmonic nanosensors: Inverse sensitivity. Nature Materials 11, 570-571
Liao Y1, Gao Y, Zhu S1, Zheng J, Chen Z2, Yin C1, Lou XI, and Zhang D1. (2015). Facile Fabrication of N-Doped Graphene as Efficient Electrocatalyst for Oxygen Reduction Reaction. ACS Appl Mater Interfaces. 9;7(35):19619-25. doi: 10.1021/acsami.5b05649.
Lili et al., Interaction of carboxylated single-walled carbon nanotubes with bovine serum albumin. Spectrochimica Acta Part A: Molecular and Biomolecular Spectroscopy Volume 105, 15 March 2013, Pages 45-51
Liu, Z., S.M. Tabakman, Z. Chen, and H. Dai. (2009). Preparation of carbon nanotube bioconjugates for biomedical applications. Nat Protoc. 4:1372-82. doi:10.1038/nprot.2009.146.
Liu, Z. et al. "PEGylated Nano-Graphene Oxide for Delivery of Water Insoluble Cancer Drugs." Journal of the American Chemical Society 130.33 (2008):10876-10877.
Liu, Z et al. Carboxylation of multiwalled carbon nanotube enhanced its biocompatibility with L02 cells through decreased activation of mitochondrial apoptotic pathway. J Biomed Mater Res A. (2014);102(3):665-73.
Ma H, Zhang X, Li X, Li R, Du B, and Wei Q. (2015). Electrochemical immunosensor for detecting typical bladder cancer biomarker based on reduced graphene oxide-tetraethylene pentamine and trimetallic AuPdPt nanoparticles. Talanta. 1;143:77-82. doi: 10.1016/j.talanta.2015.05.029.
Qingsu et al., Functionalized Buckyballs for Visualizing Microbial Species in Different States and Environments. • Scientific Reports 5, Article number: 13685 (2015)
Rodriguez-Lorenzo, L., R. de la Rica, R.A.A. Alvarez-Puebla, L.M. Liz-Marzán, and M.M. Stevens. 2012. Plasmonic nanosensors with inverse sensitivity by means of enzyme-guided crystal growth. Nat Mater. 11:604-7. doi:10.1038/nmat3337.
Shahbazi-Gahrouei, D., M. Abdolahi, S.H. Zarkesh-Esfahani, S. Laurent, C. Sermeus, and C. Gruettner. (2013). Functionalized magnetic nanoparticles for the detection and quantitative analysis of cell surface antigen. Biomed Res Int. 2013:349408. doi:10.1155/2013/349408.
Song, Y., Qu, K., Zhao, C., Ren, J. and Qu, X. (2010), Graphene Oxide: Intrinsic Peroxidase Catalytic Activity and Its Application to Glucose Detection. Adv. Mater., 22: 2206-2210. doi:10.1002/adma.200903783
Wang et al., Effective surface functionalization of nanocrystalline diamond films by direct carboxylation for PDGF detection via aptasensor. ACS Appl Mater Interfaces. 2012 Jul 25;4(7):3526-34.
Welsher, K., Z. Liu, D. Daranciang, and H. Dai. (2008). Selective probing and imaging of cells with single walled carbon nanotubes as near-infrared fluorescent molecules. Nano Lett. 8:586-90. doi:10.1021/nl072949q.
Xie J, Cao H, Jiang H, Chen Y, Shi W, Zheng H, Huang Y. Co3O4-reduced graphene oxide nanocomposite as an effective peroxidase mimetic and its application in visual biosensing of glucose. (2013). Anal Chim Acta. 24;796:92-100. doi: 10.1016/j.aca.2013.08.008.
Yang, K., L. Feng, H. Hong, W. Cai, and Z. Liu. (2013). Preparation and functionalization of graphene nanocomposites for biomedical applications. Nat Protoc. 8:2392-403. doi:10.1038/nprot.2013.146.
Yuan G, Yu C, Xia C, Gao L, Xu W, Li W, and He J. (2015). A simultaneous electrochemical multianalyte immunoassay of high sensitivity C-reactive protein and soluble CD40 ligand based on reduced graphene oxide-tetraethylene pentamine that directly adsorb metal ions as labels. Biosens Bioelectron. 15;72:237-46. doi: 10.1016/j.bios.2015.04.088.

## Claims

1. A method of converting aqueous metal into colloidal metal comprising a step of contacting an aqueous metal with a carboxylated allotrope of carbon in an aqueous buffer solution, wherein the aqueous metal is a metal rendered soluble in the aqueous solution, wherein said aqueous metal comprises Ag or said aqueous metal is AgNO₃, said carboxylated allotrope of carbon comprises graphene oxide, a spherical, tubular, or ellipsoidal fullerene, or a carbon nanotube, and wherein the method further comprises a step of adding H₂O₂ and NH₃ to the buffer solution and detecting the presence of colloidal metal by spectrophotometry.

2. The method according to claim 1, wherein said carboxylated allotrope of carbon is graphene oxide.

3. The method according to any one of the preceding claims, wherein said aqueous metal is AgNO₃.

4. The method according to claim 2, wherein graphene oxide is PEGylated.

5. The method according to claim 4, wherein PEGylated graphene oxide is conjugated to a binding protein.

6. The method according to claim 5, wherein said binding protein is an antibody.

7. The method according to claim 2, wherein said graphene oxide is carboxylated graphene oxide, GO-COOH.

## Patentansprüche

1. Verfahren zur Umwandlung eines wässrigen Metalls in ein kolloidales Metall, umfassend die Schritte des Kontaktierens eines wässrigen Metalls mit einem carboxylierten Allotropen von Kohlenstoff in einer wässrigen Pufferlösung, wobei das wässrige Metall ein Metall ist, welches in der wässrigen Lösung löslich gemacht wurde, wobei das wässrige Metall Ag enthält oder das wässrige Metall AgNO₃ ist, das carboxylierte Allotrop von Kohlenstoff Graphenoxid, ein sphärisches, tubuläres oder ellipsoides Fulleren oder eine Kohlenstoffnanoröhre enthält und wobei das Verfahren weiterhin einen Schritt der Zugabe von H₂O₂ und NH₃ zu der Pufferlösung und die Detektion der Anwesenheit von kolloidalem Metall mittels Spektrophotometrie umfasst.

2. Verfahren nach Anspruch 1, wobei das carboxylierte Allotrop von Kohlenstoff Graphenoxid ist.

3. Verfahren nach einem der vorhergehenden Ansprüche, wobei das wässrige Metall AgNO₃ ist.

4. Verfahren nach Anspruch 2, wobei das Graphenoxid pegyliert ist.

5. Verfahren nach Anspruch 4, wobei das pegylierte Graphenoxid an ein Bindeprotein konjugiert ist.

6. Verfahren nach Anspruch 5, wobei das Bindeprotein ein Antikörper ist.

7. Verfahren nach Anspruch 2, wobei das Grapenoxid carboxyliertes Graphenoxid, GO-COOH, ist.

## Revendications

1. Procédé de conversion de métal aqueux en métal colloïdal comprenant une étape de mise en contact d'un métal aqueux avec un allotrope carboxylé du carbone dans une solution tampon aqueuse, dans lequel le métal aqueux est un métal rendu soluble dans la solution aqueuse, dans lequel ledit métal aqueux comprend Ag ou ledit métal aqueux est AgNO₃, ledit allotrope carboxylé du carbone comprend un oxyde de graphène, un fullerène sphérique, tubulaire ou ellipsoïdal, ou un nanotube de carbone et dans lequel le procédé comprend en outre une étape d'ajout de H₂O₂ et de NH₃ à la solution tampon et détection de la présence de métal colloïdal par spectrophotométrie.

2. Procédé selon la revendication 1, dans lequel ledit un allotrope carboxylé du carbone est l'oxyde de graphène.

3. Procédé selon l'une quelconque des revendications précédentes dans lequel le métal aqueux est l'AgNO₃.

4. Procédé selon la revendication 2, dans lequel l'oxyde de graphène est PEGylé.

5. Procédé selon la revendication 4, dans lequel l'oxyde de graphène PEGylé est conjugué à une protéine de liaison.

6. Procédé selon la revendication 5, dans lequel ladite protéine de liaison est un anticorps.

7. Procédé selon la revendication 2, dans lequel ledit oxyde de graphène est l'oxyde de graphène carboxylé, GO-COOH.
